# FASCICULE DE BREVET EUROPEEN

(11) **EP 3 486 513 B1**
(45) Date de publication et mention de la délivrance du brevet: **30.12.2020**
(21) Numéro de dépôt: 18207082.1
(22) Date de dépôt: 19.11.2018
(51) Int. Cl.: F16C 33/58, F16C 19/18, B60B 27/00

(54) **MOYEU D'UN PALIER À ROULEMENT**
NABE EINES WÄLZLAGERS
HUB OF A ROLLING BEARING

(30) Priorité: 20.11.2017 FR 1760947
(43) Date de publication de la demande: 22.05.2019
(73) Titulaire: NTN-SNR Roulements, 74000 Annecy (FR)
(72) Inventeur: MARTINEZ, Solène, 73100 Gresy sur Aix (FR)
(74) Mandataire: Sayettat, Julien Christian

(56) Documents cités:
- EP-A1- 2 505 381
- EP-A1- 2 863 082
- CN-U- 203 651 333
- DE-A1-102008 034 593
- US-A1- 2007 052 282

## Description

L'invention concerne un moyeu ainsi qu'un palier à roulement comprenant un moyeu et un organe extérieur disposé autour dudit moyeu pour le montage en rotation relative de deux éléments.

L'invention s'applique plus particulièrement au montage d'un ensemble roulant de véhicule, notamment automobile, sur un élément de suspension dudit véhicule, ledit ensemble roulant comprenant notamment une roue et un disque de frein.

Pour le montage d'un tel ensemble roulant, on connaît des paliers dans lesquels l'organe extérieur et le moyeu portent chacun au moins une piste de roulement qui sont disposées en regard radial pour réaliser au moins un chemin de roulement dans lequel une rangée de corps roulants est disposée afin de permettre la rotation relative du moyeu et de l'organe extérieur.

Selon une réalisation, notamment décrite dans le document CN-203 651 333, le moyeu comprend un fût autour duquel l'organe extérieur est monté en rotation, la périphérie extérieure dudit fût étant pourvue de deux pistes de roulement respectivement interne et externe.

Par ailleurs, le moyeu comprend un flasque qui s'étend radialement autour du fût en présentant des conduits répartis angulairement pour permettre l'association d'un élément au moyeu. Ainsi, en associant l'organe extérieur à un élément de suspension du véhicule, on peut monter en rotation l'ensemble roulant en le fixant au flasque.

De par l'intégration des différentes fonctions et des sollicitations mécaniques qui en résultent, les paliers à roulement sont relativement massifs, ce qui pose des problèmes de poids, d'encombrement et de coûts.

L'invention a pour but de perfectionner l'art antérieur en proposant notamment un moyeu d'un palier à roulement dont le compromis entre la masse et la résistance mécanique est optimisé pour l'application considérée, notamment relativement à la durée de vie, à la rigidité et à la tenue en fatigue dudit palier.

A cet effet, et selon un premier aspect, l'invention propose un moyeu d'un palier à roulement présentant un fût dont la périphérie extérieure est pourvue d'au moins une piste de roulement permettant la rotation dudit moyeu autour d'un axe, le fût présentant au moins un évidement, l'évidement présentant une géométrie annulaire de révolution autour de l'axe de rotation, la distance minimale entre la paroi dudit évidement et la périphérie extérieure du fût étant supérieure à 10% du diamètre du fond de la piste de roulement.

Selon un deuxième aspect, l'invention propose un palier à roulement comprenant un tel moyeu dont la périphérie extérieure du fût est pourvue de deux pistes de roulement respectivement interne et externe, et un organe extérieur disposé autour dudit fût en réalisant un chemin de roulement respectivement interne et externe dans chacun desquels une rangée de corps roulants respectivement interne et externe est disposée afin de permettre la rotation relative du moyeu et de l'organe extérieur autour de l'axe, la rangée de corps roulants interne - respectivement externe - étant en contact sur la piste de roulement interne - respectivement externe - selon une ligne d'effort interne - respectivement externe - formant avec l'axe de rotation du palier un angle de contact interne - respectivement externe.

D'autres objets et avantages de l'invention apparaîtront dans la description qui suit, faite en référence aux figures annexées, dans lesquelles :

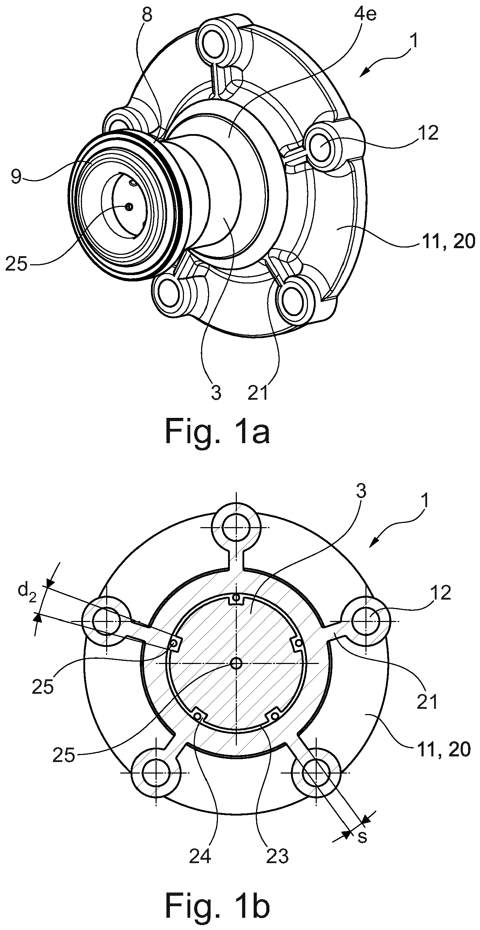

- les figures 1a et 1b représentent un moyeu selon un mode de réalisation de l'invention, respectivement en perspective (figure 1a) et en coupe transversale (figure 1b) ;
- la figure 2 représente en coupe longitudinale un palier à roulement comprenant un moyeu selon les figures 1a et 1b.

En relation avec ces figures, on décrit ci-dessous un palier à roulement pour le montage en rotation relative de deux éléments, ledit palier comprenant un moyeu 1 et un organe extérieur 2 disposé autour dudit moyeu. Dans la description, les termes « extérieur » et « intérieur » sont définis par rapport à l'axe X de rotation du palier, respectivement pour une localisation éloignée et proche dudit axe.

Dans le mode de réalisation représenté, le palier est destiné au montage d'un ensemble roulant de véhicule, notamment automobile, sur un élément de suspension dudit véhicule, ledit ensemble roulant comprenant notamment une roue et un disque de frein.

Pour ce faire, le moyeu 1 comprend un fût 3 monté tournant dans l'organe extérieur 2, ledit organe extérieur présentant des moyens d'association à un élément de suspension du véhicule. Toutefois, l'invention n'est pas limitée à une telle application et peut s'appliquer à un montage dans lequel l'organe extérieur 2 est tournant et le moyeu 1 est fixe.

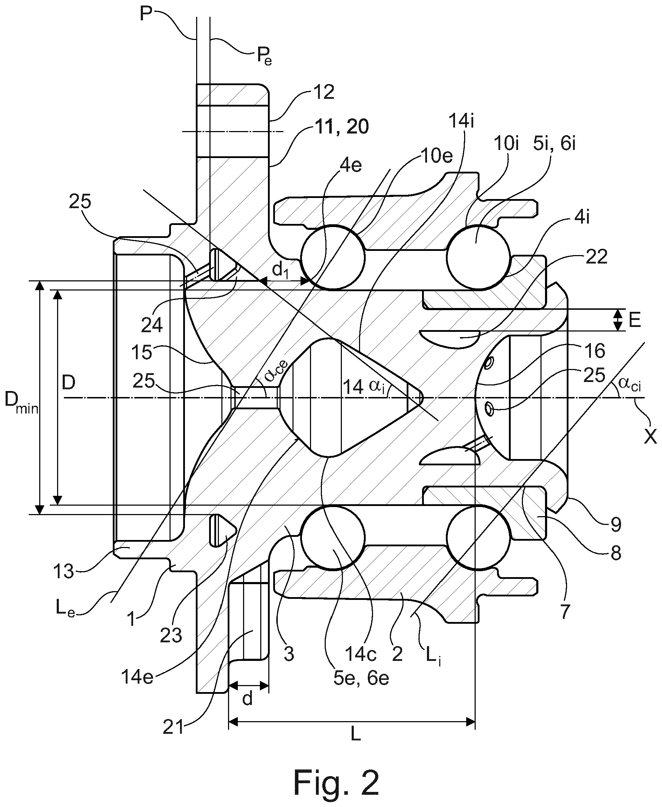

La périphérie extérieure du fût 3 est pourvue de deux pistes de roulement respectivement interne 4ᵢ et externe 4ₑ qui s'étendent chacune de façon circulaire en étant espacées axialement l'une de l'autre. Dans la description, les termes « externe » et « interne » sont définis par rapport au montage du palier sur le véhicule, respectivement à gauche et à droite sur la figure 2.

L'organe extérieur 2 est disposé autour du fût 3 en réalisant un chemin de roulement respectivement interne 5ᵢ et externe 5ₑ dans chacun desquels une rangée de corps roulants respectivement interne 6ᵢ et externe 6ₑ est disposée afin de permettre la rotation relative du moyeu 1 et de l'organe extérieur 2 autour de l'axe X.

Dans le mode de réalisation représenté, le fût 3 présente une piste de roulement externe 4ₑ et une portée interne 7 destinée à recevoir une bague 8 sur laquelle une piste de roulement interne 4ᵢ est formée, le bord libre 9 de ladite portée étant replié pour former une collerette de précharge axiale de ladite bague sur la périphérie du fût 3.

Par ailleurs, l'organe extérieur 2 présente également une piste de roulement interne 10ᵢ et une piste de roulement externe 10ₑ qui sont disposées chacune en regard radial de la piste de roulement 4ᵢ, 4ₑ correspondante du fût 3, une rangée de billes sphériques 6ᵢ, 6ₑ étant en contact oblique dans les chemins de roulement 5ᵢ, 5ₑ ainsi formés.

Toutefois, l'invention n'est pas limitée à une réalisation particulière de la fonction de rotation du palier à roulement, notamment relativement à la géométrie des corps roulants 6ᵢ, 6ₑ et des différentes pistes de roulement 4ᵢ, 4ₑ ; 10ᵢ, 10ₑ sur le fût 3 et/ou l'organe extérieur 2.

Pour permettre l'association d'un ensemble roulant au moyeu 1, le fût 3 est équipé d'un flasque 11 qui est formé autour du côté externe dudit fût, ledit flasque s'étendant radialement en présentant des conduits 12 d'association répartis angulairement.

En particulier, le flasque 11 présente une extension annulaire 13 qui s'étend axialement depuis un côté externe du fût 3, l'ensemble roulant présentant un alésage qui est disposé autour de ladite extension annulaire en assurant une concentricité parfaite du montage dudit ensemble roulant sur ledit flasque avant sa fixation dans les conduits 12.

Par ailleurs, le flasque présente un disque 20 qui s'étend radialement autour du fût 3, ledit disque étant équipé de conduits 12 répartis angulairement pour permettre l'association d'un élément au moyeu, chacun desdits conduits étant reliés au fût 3 par une nervure 21 formée en saillance sur la face du disque 20 en s'étendant radialement, ladite nervure étant inscrite dans un secteur angulaire S dudit disque.

Le moyeu 1 est réalisé en une seule pièce et peut être optimisé, notamment au niveau du matériau le constituant, relativement aux efforts mécaniques auxquels il doit résister. Selon une réalisation, le moyeu 1 peut être réalisé, notamment par forgeage, dans un matériau métallique, notamment en acier à roulement de type C56, pour permettre au fût 3 de supporter les pressions de contact de roulement et au flasque 11 de supporter les contraintes mécaniques venant de l'ensemble roulant. Selon une autre réalisation, le moyeu 1 peut être obtenu par fabrication additive, notamment par frittage laser d'une poudre d'acier à haute teneur en carbone, par exemple de type 100Cr6.

Comme représenté sur la figure 2, la rangée de corps roulants interne 6i - respectivement externe 6ₑ - est en contact sur la piste de roulement interne 5i-respectivement externe 5ₑ - selon une ligne d'effort interne Lᵢ - respectivement externe Lₑ - formant avec l'axe de rotation X du palier un angle de contact interne α_{ci} - respectivement externe α_{ce}. En particulier, la ligne d'effort Lᵢ, Lₑ est considérée au niveau du corps roulant 6ᵢ, 6ₑ le plus chargé de chacun des côtés respectivement interne et externe.

Le fût 3 présente au moins un évidement 22, 23 annulaire de révolution autour de l'axe de rotation X. Pour optimiser le poids du moyeu 1 sans pour autant compromettre sa résistance mécanique, la distance minimale entre la paroi de l'évidement 22, 23 et la périphérie extérieure du fût 3 est supérieure à 10% du diamètre D du fond de la piste de roulement 4ᵢ, 4ₑ.

Dans le mode de réalisation représenté, l'évidement annulaire 22, 23 présente une section qui s'étend angulairement sur 360° pour former un évidement ininterrompu. En particulier, la géométrie de la section de l'évidement 22, 23 peut être triangulaire, circulaire pour former un tore, ou suivant une autre géométrie, éventuellement évolutive angulairement.

La taille de l'évidement annulaire 22, 23 et donc le gain de poids peuvent être augmentés tout en conservant suffisamment de matière pour la résistance mécanique en prévoyant qu'il présente :
- une longueur axiale, c'est-à-dire mesurée entre ses bords interne et externe le long de l'axe X, comprise entre 5% et 15% de la longueur axiale L du fût 3 prise entre ses bords interne et externe ; et/ou
- une hauteur radiale comprise entre 10% et 30% du diamètre D du fond de la piste de roulement 4ᵢ, 4ₑ.

Dans le mode de réalisation représenté, le moyeu 1 présente un évidement interne 22 qui est formé dans le côté interne du fût 3. En particulier, l'évidement interne 22 est entouré par la bague 8, notamment en présentant un diamètre maximal qui est inférieur au diamètre D du fond de la piste de roulement 4i, 4ₑ.

Selon une réalisation, la distance radiale minimale entre la paroi extérieure de l'évidement interne 22 et la portée interne 7 du fût est supérieure à 10% du diamètre D du fond de la piste de roulement 4ᵢ, 4ₑ. Ainsi, une épaisseur E de matière suffisante peut être disposée entre la bague 8 et l'évidement interne 22, notamment relativement à la rigidité vis-à-vis de la pression exercée par les corps roulants 6ₑ sur la piste de roulement 4i de ladite bague.

Le moyeu 1 représenté présente également un évidement externe 23 qui est entouré par le flasque 11, notamment en ayant une paroi qui présente un diamètre minimum Dₘᵢₙ qui est supérieur au diamètre D du fond de la piste de roulement 4ᵢ, 4ₑ. En outre, pour conserver une épaisseur de matière suffisante, la paroi de l'évidement externe présente un plan externe Pₑ qui est disposé du côté interne d'un plan latéral externe P du flasque 11.

Selon une réalisation avantageuse, l'évidement externe 23 présente une section qui est localement augmentée sur au moins une partie des secteurs angulaires S des nervures 21 afin de former une chambre 24 sous chacune desdites nervures. Ainsi, du fait de la rigidité apportée par les nervures 21, le volume de l'évidement externe 23 peut être localement augmenté pour conférer un allègement du moyeu 1 sans compromettre ses performances mécaniques.

Le compromis entre poids et résistance mécanique peut être optimisé en prévoyant que :
- la distance axiale d₁ entre le bord interne d'une chambre 24 et la piste de roulement externe 4ₑ soit comprise entre 90% et 110% de la dimension axiale d de la nervure 21 correspondante, notamment en étant sensiblement égale à elle ; et/ou
- la dimension angulaire d₂ d'une chambre 24 soit comprise entre 90% et 110% de la dimension du secteur angulaire S de la nervure 21 correspondante, notamment en étant sensiblement égale à elle.

Selon une réalisation, la chambre 24 présente une section au moins doublée par rapport à la section de l'évidement externe 23. En relation avec la figure 2, la section de la chambre 24 présente une géométrie triangulaire qui correspond à un dédoublement de la section triangulaire de l'évidement externe 23.

Dans le mode de réalisation représenté, le fût 3 présente en outre un évidement 14 central de révolution autour de l'axe de rotation X, ledit évidement comprenant une partie conique interne 14ᵢ et une partie conique externe 14ₑ qui sont reliées entre elles par leur base au niveau d'une partie centrale 14_{c}.

Pour optimiser le poids du palier sans pour autant compromettre sa résistance mécanique, la distance minimale entre les parois des évidements interne 22 et central 14 est supérieure à 20% du diamètre D du fond de la piste de roulement 4ᵢ, 4ₑ. Par ailleurs, l'évidement externe 23 présente une paroi extérieure qui peut former un angle αi avec l'axe de rotation X qui est tel que : αᵢ = 90 - α_{ce} ± 3°.

Pour des raisons de fabrication, notamment en fabrication additive mais également pour éliminer un éventuel insert ayant servi à former un évidement 14, 22, 23, ledit évidement peut être relié à l'extérieur du fût par un conduit 25.

Dans l'optique d'un gain de poids, le fût 3 peut présenter un bord externe dans lequel une cavité conique de révolution 15 est formée. En particulier, et comme représenté sur la figure 2 en relation avec une amélioration de résistance mécanique du palier, la cavité 15 forme un angle solide qui est essentiellement égal à celui formé par révolution de la ligne d'effort externe Lₑ.

Plus précisément, la cavité conique 15 débouche dans la cavité cylindrique formée par l'extension annulaire 13 du flasque 11, la paroi de la cavité conique 15 étant sensiblement tangente à la ligne d'effort externe Lₑ.

Du côté interne du moyeu 3, toujours pour optimiser le compromis masse / résistance mécanique, une cavité de révolution 16 peut être formée dans le bord interne du fût 3, notamment à l'intérieur de la collerette 9 d'association de la bague 8, ladite cavité pouvant présenter un fond sensiblement sphérique dans lequel ledit bord est formé. En particulier, la distance minimale entre la paroi de l'évidement interne 22 et la périphérie de la cavité 16 est supérieure à 10% du diamètre D du fond de la piste de roulement 4ᵢ, 4ₑ.

## Revendications

1. Moyeu (1) d'un palier à roulement présentant un fût (3) dont la périphérie extérieure est pourvue d'au moins une piste de roulement (4ᵢ, 4ₑ) permettant la rotation dudit moyeu (1) autour d'un axe (X), le fût (3) présentant au moins un évidement (22, 23), ledit palier étant **caractérisé en ce que** l'évidement (22, 23) présente une géométrie annulaire de révolution autour de l'axe de rotation (X), la distance minimale entre la paroi dudit évidement et la périphérie extérieure du fût (3) étant supérieure à 10% du diamètre D du fond de la piste de roulement (4ᵢ, 4ₑ).

2. Moyeu (1) selon la revendication 1, **caractérisé en ce qu'**il présente un évidement interne (22) qui est formé dans le côté interne du fût (3).

3. Moyeu (1) selon la revendication 2, **caractérisé en ce que** la paroi de l'évidement interne (22) présente un diamètre maximal qui est inférieur au diamètre D du fond de la piste de roulement (4ᵢ, 4ₑ).

4. Moyeu (1) selon l'une quelconque des revendications 1 à 3, **caractérisé en ce qu'**il comprend un flasque (11) qui est formé autour du côté externe du fût (3), ledit moyeu présentant un évidement externe (23) qui est entouré par le flasque (3).

5. Moyeu (1) selon la revendication 4, **caractérisé en ce que** la paroi de l'évidement externe (23) présente un diamètre minimum (Dₘᵢₙ) qui est supérieur au diamètre D du fond de la piste de roulement (4ᵢ, 4ₑ).

6. Moyeu (1) selon l'une des revendications 4 ou 5, **caractérisé en ce que** la paroi de l'évidement externe (23) présente un plan externe (Pₑ) qui est disposé du côté interne d'un plan latéral externe (P) du flasque (11).

7. Moyeu (1) selon l'une quelconque des revendications 4 à 6, **caractérisé en ce que** le flasque (11) présente un disque (20) qui s'étend radialement autour du fût (3), ledit disque étant équipé de conduits (12) répartis angulairement pour permettre l'association d'un élément au moyeu (1), chacun desdits conduits étant reliés au fût (3) par une nervure (21) formée sur un secteur angulaire (S) dudit disque, l'évidement externe (23) présentant une section qui est localement augmentée sur au moins une partie des secteurs angulaires (S) desdites nervures afin de former une chambre (24) sous chacune desdites nervures.

8. Moyeu (1) selon la revendication 7, **caractérisé en ce que** la distance axiale (d₁) entre le bord interne d'une chambre (24) et la piste de roulement (4ₑ) est comprise entre 90% et 110% de la dimension axiale (d) de la nervure (21) correspondante.

9. Moyeu (1) selon l'une des revendications 7 ou 8, **caractérisé en ce que** la dimension angulaire (d₂) d'une chambre (24) est comprise entre 90% et 110% de la dimension du secteur angulaire (S) de la nervure (21) correspondante.

10. Moyeu (1) selon l'une quelconque des revendications 7 à 9, **caractérisé en ce qu'**une chambre (24) présente une section au moins doublée par rapport à la section de l'évidement externe (23).

11. Moyeu (1) selon la revendication 10, **caractérisé en ce que** la section de l'évidement externe (23) est de géométrie triangulaire, la section de la chambre (24) présentant une géométrie triangulaire qui correspond à un dédoublement de celle de la section dudit évidement.

12. Moyeu (1) selon l'une quelconque des revendications 1 à 11, **caractérisé en ce que** l'évidement annulaire (22, 23) présente une longueur axiale qui est comprise entre 5% et 15% de la longueur axiale (L) du fût (3) prise entre ses bords interne et externe.

13. Moyeu (1) selon l'une quelconque des revendications 1 à 12, **caractérisé en ce que** l'évidement annulaire (22, 23) présente une hauteur radiale qui est comprise entre 10% et 30% du diamètre (D) du fond de la piste de roulement (4i, 4e).

14. Moyeu (1) selon l'une quelconque des revendications 1 à 13, **caractérisé en ce que** le fût (3) présente en outre un évidement central (14) de révolution autour de l'axe de rotation (X), ledit évidement comprenant une partie conique interne (14ᵢ) et une partie conique externe (14ₑ) qui sont reliées entre elles par leur base au niveau d'une partie centrale (14_{c}).

15. Moyeu (1) selon la revendication 14 lorsqu'elle dépend de la revendication 2, **caractérisé en ce que** la distance minimale entre les parois des évidements interne (22) et central (14) est supérieure à 20% du diamètre (D) du fond de la piste de roulement (4ᵢ, 4ₑ).

16. Moyeu (1) selon l'une quelconque des revendications 1 à 15, **caractérisé en ce qu'**un évidement (14, 22, 23) est relié à l'extérieur du fût par au moins un conduit (25).

17. Palier à roulement comprenant un moyeu (1) selon l'une quelconque des revendications 1 à 16 dont la périphérie extérieure du fût est pourvue de deux pistes de roulement respectivement interne (4ᵢ) et externe (4ₑ), et un organe extérieur (2) disposé autour dudit fût en réalisant un chemin de roulement respectivement interne (5ᵢ) et externe (5ₑ) dans chacun desquels une rangée de corps roulants respectivement interne (6ᵢ) et externe (6ₑ) est disposée afin de permettre la rotation relative du moyeu (1) et de l'organe extérieur (2) autour de l'axe (X), la rangée de corps roulants interne (6ᵢ) - respectivement externe (6ₑ) - étant en contact sur la piste de roulement interne (4ᵢ) - respectivement externe (4ₑ) - selon une ligne d'effort interne (Lᵢ) - respectivement externe (Lₑ) - formant avec l'axe de rotation (X) du palier un angle de contact interne α_{ci} - respectivement externe α_{ce}.

18. Palier à roulement selon la revendication 17 lorsqu'elle dépend de la revendication 5, **caractérisé en ce que** l'évidement externe (23) présente une paroi extérieure formant un angle αi avec l'axe de rotation (X) qui est tel que : αᵢ = 90 - α_{ce} ± 3°.

## Patentansprüche

1. Nabe (1) eines Wälzlagers, die eine Hülse (3) aufweist, deren Außenumfang mit mindestens einer Rollfläche (4ᵢ, 4ₑ) versehen ist, die die Drehung der Nabe (1) um eine Achse (X) ermöglicht, wobei die Hülse (3) mindestens eine Aussparung (22, 23) aufweist, wobei das Lager **dadurch gekennzeichnet ist, dass** die Aussparung (22, 23) eine ringförmige Rotationsgeometrie um die Drehachse (X) herum aufweist, wobei der Mindestabstand zwischen der Wand der Aussparung und dem Außenumfang der Hülse (3) größer als 10 % des Durchmessers D des Bodens der Rollfläche (4ᵢ, 4ₑ) ist.

2. Nabe (1) nach Anspruch 1, **dadurch gekennzeichnet, dass** sie eine innere Aussparung (22) aufweist, die an der Innenseite der Hülse (3) gebildet ist.

3. Nabe (1) nach Anspruch 2, **dadurch gekennzeichnet, dass** die Wand der inneren Aussparung (22) einen maximalen Durchmesser aufweist, der kleiner als der Durchmesser D des Bodens der Rollfläche (4ᵢ, 4ₑ) ist.

4. Nabe (1) nach einem der Ansprüche 1 bis 3, **dadurch gekennzeichnet, dass** sie einen Flansch (11) umfasst, der um die Außenseite der Hülse (3) herum gebildet ist, wobei die Nabe eine äußere Aussparung (23) aufweist, die von dem Flansch (3) umgeben ist.

5. Nabe (1) nach Anspruch 4, **dadurch gekennzeichnet, dass** die Wand der äußeren Aussparung (23) einen Mindestdurchmesser (Dₘᵢₙ) aufweist, der größer als der Durchmesser D des Bodens der Rollfläche (4ᵢ, 4ₑ) ist.

6. Nabe (1) nach einem der Ansprüche 4 oder 5, **dadurch gekennzeichnet, dass** die Wand der äußeren Aussparung (23) eine äußere Ebene (Pₑ) aufweist, die an der Innenseite eine äußeren seitlichen Ebene (P) des Flansches (11) angeordnet ist.

7. Nabe (1) nach einem der Ansprüche 4 bis 6, **dadurch gekennzeichnet, dass** der Flansch (11) eine Scheibe (20) aufweist, die sich radial um die Hülse (3) herum erstreckt, wobei die Scheibe mit Kanälen (12) ausgestattet ist, die winkelig verteilt sind, um den Verbund eines Elements mit der Nabe (1) zu ermöglichen, wobei jeder der Kanäle durch eine Rippe (21) mit der Hülse (3) verbunden ist, die in einem Winkelsektor (S) der Scheibe gebildet wird, wobei die äußere Aussparung (23) eine Sektion aufweist, die lokal über mindestens einen Teil der Winkelsektoren (S) der Rippen erhöht ist, um eine Kammer (24) unter jeder der Rippen zu bilden.

8. Nabe (1) nach Anspruch 7, **dadurch gekennzeichnet, dass** der axiale Abstand (d₁) zwischen dem inneren Rand einer Kammer (24) und der Rollfläche (4ₑ) zwischen 90 % und 110 % der axialen Abmessung (d) der entsprechenden Rippe (21) enthalten ist.

9. Nabe (1) nach einem der Ansprüche 7 oder 8, **dadurch gekennzeichnet, dass** die Winkelabmessung (d₂) einer Kammer (24) zwischen 90 % und 110 % der Abmessung des Winkelsektors (S) der entsprechenden Rippe (21) enthalten ist.

10. Nabe (1) nach einem der Ansprüche 7 bis 9, **dadurch gekennzeichnet, dass** eine Kammer (24) eine in Bezug auf die Sektion der äußeren Aussparung (23) mindestens verdoppelte Sektion aufweist.

11. Nabe (1) nach Anspruch 10, **dadurch gekennzeichnet, dass** die Sektion der äußeren Aussparung (23) in einer Dreiecksgeometrie ist, wobei die Sektion der Kammer (24) eine Dreiecksgeometrie aufweist, die einer Verdoppelung jener der Sektion der Aussparung entspricht.

12. Nabe (1) nach einem der Ansprüche 1 bis 11, **dadurch gekennzeichnet, dass** die ringförmige Aussparung (22, 23) eine axiale Länge aufweist, die zwischen 5 % und 15 % der axialen Länge (L) der Hülse (3), die zwischen dem inneren und äußeren Rand erhoben wird, enthalten ist.

13. Nabe (1) nach einem der Ansprüche 1 bis 12, **dadurch gekennzeichnet, dass** die ringförmige Aussparung (22, 23) eine radiale Höhe aufweist, die zwischen 10 % und 30 % des Durchmessers (D) des Bodens der Rollfläche (4ᵢ, 4ₑ) enthalten ist.

14. Nabe (1) nach einem der Ansprüche 1 bis 13, **dadurch gekennzeichnet, dass** die Hülse (3) weiter eine zentrale Rotationsaussparung (14) um die Drehachse (X) herum aufweist, wobei die Aussparung einen inneren konischen Teil (14ᵢ) und einen äußeren konischen Teil (14ₑ) umfasst, die über ihre Basis im Bereich eines zentralen Teils (14_{c}) miteinander verbunden sind.

15. Nabe (1) nach Anspruch 14, wenn von Anspruch 2 abhängig, **dadurch gekennzeichnet, dass** der Mindestabstand zwischen den Wänden der inneren (22) und zentralen (14) Aussparung größer als 20 % des Durchmessers (D) des Bodens der Rollfläche (4ᵢ, 4ₑ) ist.

16. Nabe (1) nach einem der Ansprüche 1 bis 15, **dadurch gekennzeichnet, dass** eine Aussparung (14, 22, 23) durch mindestens einen Kanal (25) mit der Außenseite der Hülse verbunden ist.

17. Wälzlager, umfassend eine Nabe (1) nach einem der Ansprüche 1 bis 16, deren Außenumfang der Hülse mit zwei, jeweils inneren (4ᵢ) und äußeren (4ₑ) Rollflächen versehen ist, und ein äußeres Organ (2), das um die Hülse herum angeordnet ist, jeweils einen inneren (5i) und äußeren (5ₑ) Rollweg realisierend, auf jedem derselben eine Reihe von jeweils inneren (6ᵢ) und äußeren (6ₑ) Rollkörpern angeordnet ist, um die Drehung der Nabe (1) und des äußeren Organs (2) zueinander um die Achse (X) zu ermöglichen, wobei die Reihe von inneren (6ᵢ) Rollkörpern - beziehungsweise äußeren Rollkörpern (6ₑ) - in Kontakt auf der inneren (4ᵢ) - beziehungsweise äußeren (4ₑ) Rollfläche - entlang einer inneren (Lᵢ) - beziehungsweise äußeren (Lₑ) Kraftlinie- sind, die mit der Drehachse (X) des Lagers einen inneren α_{ci} - beziehungsweise äußeren α_{ce} - Kontaktwinkel bildet.

18. Wälzlager nach Anspruch 17, wenn von Anspruch 5 abhängig, **dadurch gekennzeichnet, dass** die äußere Aussparung (23) eine äußere Wand aufweist, die mit der Drehachse (X) einen Winkel *α*ᵢ bildet, der derart ist, dass: αᵢ = 90 - α_{ce} ± 3°.

## Claims

1. Hub (1) of a rolling bearing having a shank (3), the outer periphery of which is provided with at least one raceway (4ᵢ, 4ₑ) allowing the rotation of said hub (1) about an axis (X), the shank (3) having at least one recess (22, 23), said bearing being **characterised in that** the recess (22, 23) has an annular geometry of revolution about the axis of rotation (X), the minimum distance between the wall of said recess and the outer periphery of the shank (3) being greater than 10% of the diameter D of the bottom of the raceway (4ᵢ, 4ₑ).

2. Hub (1) according to claim 1, **characterised in that** it has an inner recess (22) that is formed in the inner side of the shank (3).

3. Hub (1) according to claim 2, **characterised in that** the wall of the inner recess (22) has a maximum diameter that is less than the diameter D of the bottom of the raceway (4ᵢ, 4ₑ) .

4. Hub (1) according to any one of claims 1 to 3, **characterised in that** it comprises a flange (11) that is formed around the outer side of the shank (3), said hub having an outer recess (23) that is surrounded by the flange (3).

5. Hub (1) according to claim 4, **characterised in that** the wall of the outer recess (23) has a minimum diameter (Dₘᵢₙ) that is greater than the diameter D of the bottom of the raceway (4ᵢ, 4ₑ) .

6. Hub (1) according to one of claims 4 or 5, **characterised in that** the wall of the outer recess (23) has an outer plane (Pₑ) that is disposed on the inner side of an outer lateral plane (P) of the flange (11).

7. Hub (1) according to any one of claims 4 to 6, **characterised in that** the flange (11) has a disc (20) that extends radially around the shank (3), said disc being equipped with ducts (12) angularly distributed to allow the association of an element with the hub (1), each of said ducts being connected to the shank (3) by a rib (21) formed on an angular sector (S) of said disc, the outer recess (23) having a cross-section that is locally increased on at least a part of the angular sectors (S) of said ribs in order to form a chamber (24) under each of said ribs.

8. Hub (1) according to claim 7, **characterised in that** the axial distance (d₁) between the inner edge of a chamber (24) and the raceway (4ₑ) is between 90% and 110% of the axial dimension (d) of the corresponding rib (21).

9. Hub (1) according to one of claims 7 or 8, **characterised in that** the angular dimension (d₂) of a chamber (24) is between 90% and 110% of the dimension of the angular sector (S) of the corresponding rib (21).

10. Hub (1) according to any one of claims 7 to 9, **characterised in that** a chamber (24) has a cross-section at least doubled with respect to the cross-section of the outer recess (23).

11. Hub (1) according to claim 10, **characterised in that** the cross-section of the outer recess (23) has a triangular geometry, the cross-section of the chamber (24) having a triangular geometry that corresponds to a splitting in two of that of the cross-section of said recess.

12. Hub (1) according to any one of claims 1 to 11, **characterised in that** the annular recess (22, 23) has an axial length that is between 5% and 15% of the axial length (L) of the shank (3) taken between its inner and outer edges.

13. Hub (1) according to any one of claims 1 to 12, **characterised in that** the annular recess (22, 23) has a radial height that is between 10% and 30% of the diameter (D) of the bottom of the raceway (4ᵢ, 4ₑ).

14. Hub (1) according to any one of claims 1 to 13, **characterised in that** the shank (3) further has a central recess (14) of revolution about the axis of rotation (X), said recess comprising an inner conical part (14ᵢ) and an outer conical part (14ₑ) that are connected to each other by their base at a central part (14_{c}).

15. Hub (1) according to claim 14 when it is dependent on claim 2, **characterised in that** the minimum distance between the walls of the inner (22) and central (14) recesses is greater than 20% of the diameter (D) of the bottom of the raceway (4ᵢ, 4ₑ).

16. Hub (1) according to any one of claims 1 to 15, **characterised in that** a recess (14, 22, 23) is connected to the outside of the shank by at least one duct (25).

17. Rolling bearing comprising a hub (1) according to any one of claims 1 to 16, in which the outer periphery of the shank is provided with two raceways, respectively inner (4ᵢ) and outer (4ₑ), and an outer member (2) disposed around said shank while creating a respectively inner (5ᵢ) and outer (5ₑ) rolling track in each of which a row of respectively inner (6ᵢ) and outer (6ₑ) rolling bodies is disposed in order to allow the relative rotation of the hub (1) and of the outer member (2) about the axis (X), the row of inner (6ᵢ) - and respectively outer (6ₑ) - rolling bodies being in contact on the inner (4ᵢ) - and respectively outer (4ₑ) - raceway according to an inner (Lᵢ) - and respectively outer (Lₑ) - stress line forming with the axis of rotation (X) of the bearing an inner α_{ci} - and respectively outer α_{ce} - angle of contact.

18. Rolling bearing according to claim 17 when it is dependent on claim 5, **characterised in that** the outer recess (23) has an outer wall forming an angle αi with the axis of rotation (X) which is such that: ${α}_{i} = 90 - {α}_{ce} \pm 3 ° .$
